(19)
Europäisches Patentamt
European Patent Office
Office européen des brevets

(11) EP 1 659 101 A1

(12) **DEMANDE DE BREVET EUROPEEN**

(43) Date de publication:
**24.05.2006 Bulletin 2006/21**

(51) Int Cl.:
***C04B 7/32*** *(2006.01)*

(21) Numéro de dépôt: **05077753.1**

(22) Date de dépôt: **24.04.2003**

(84) Etats contractants désignés:
**AT BE BG CH CY CZ DE DK EE ES FI FR GB GR HU IE IT LI LU MC NL PT RO SE SI SK TR**

(30) Priorité: **24.04.2002 FR 0205174**

(62) Numéro(s) de document de la (des) demande(s) initiale(s) en application de l'article 76 CBE:
**03740662.6 / 1 501 769**

(71) Demandeur: **Lafarge Aluminates**
**75016 Paris (FR)**

(72) Inventeurs:
- **Amathieu, Loris**
  **69720 Saint Laurent de Mure (FR)**
- **Touzo, Bruno**
  **69008 Lyon (FR)**

(74) Mandataire: **Catherine, Alain et al**
**Cabinet Harlé & Phélip**
**7, rue de Madrid**
**75008 Paris (FR)**

Remarques:
Cette demande a été déposée le 06 - 12 - 2005 comme demande divisionnaire de la demande mentionnée sous le code INID 62.

(54) **Liant ettringitique comprenant des sulfates de calcium et un composé minéral d'aluminates de calcium**

(57) Le Liant ettringitique selon l'invention comprend des sulfates de calcium et un composé minéral d'aluminates de calcium, le composé minéral d'aluminates de calcium comprenant des oxydes de calcium C et d'aluminium A, solubles et combinés en une ou plusieurs phases minéralogiques cristallisées et/ou amorphes, dans des proportions telles que :

- le rapport molaire C/A utile du composé minéral d'aluminates de calcium est compris entre 1,2 et 2,7 ;
- la somme en poids des phases (C+A) utiles représente au moins 30% du poids total du composé minéral ;
- le rapport molaire sulfate de calcium/oxyde d'aluminium a dans le liant ettringitique est compris entre 0,5 et 2.

EP 1 659 101 A1

## Description

La présente invention concerne un liant ettringitique pour mortier, notamment un mortier dense, présentant de préférence un rapport pondéral eau/solides inférieur à 0,5, ledit liant comprenant un composé minéral d'aluminates de calcium et du sulfate de calcium.

Par liant ettringitique, on entend un liant hydraulique dont les composants, lors de l'hydratation dans les conditions normales d'utilisation, donnent comme hydrate principal l'ettringite, qui est un trisulphoaluminate de calcium répondant à la formule $3CaO:Al_2O_3.3CaSO_4.32H_2O$.

Par solides, on entend l'ensemble des constituants secs du mortier.

Le liant ettringitique comprenant un composé minéral d'aluminates de calcium et du sulfate de calcium est destiné à être utilisé dans des mortiers et bétons de la construction pour lesquels une remise en service rapide de l'ouvrage est attendue. En particulier, il permet de constituer des produits de réparation et de préparation des sols tels que par exemple les chapes, les enduits de lissage, les colles carrelage.

La remise en service rapide d'ouvrages impose d'atteindre, selon les applications, un niveau de résistances mécaniques minimum à une échéance donnée, et / ou un délai de recouvrement défini par l'humidité résiduelle dans le matériau. Les produits à remise en service rapide sont classiquement constitués à partir de liant dont l'hydratation conduit à la formation d'ettringite.

Dans l'application enduit de lissage par exemple, selon les spécifications du Centre Scientifique et Technique du Bâtiment (« Produits et systèmes de préparation de sols intérieurs pour la pose de revêtements de sols minces » - Guide technique pour l'avis technique et le classement P. Cahiers du CSTB, n° 2893 - Livraison 370 de juin 1996), les produits doivent satisfaire à la fois des critères de performances mécaniques, de performances d'adhérence, et des critères d'aptitude à l'emploi (homogénéité de la pâte, fluidité (diamètre d'étalement de la pâte préalablement versée dans un anneau de 30 mm de hauteur et 50 mm de diamètre) et temps de gélification).

Outre les valeurs imposées par le CSTB, les enduits de lissage rapides doivent satisfaire au moins les critères suivants dans des conditions normales de température et d'hygrométrie :

- étalement de 150 mm aux échéances 7 et 20 min ;
- résistances mécaniques en compression supérieures à 4 MPa à 4h00 ;
- délai de recouvrement de 24h (3% d'humidité résiduelle dans le matériau pour des épaisseurs d'application inférieures à 10 mm) ;
- résistances mécaniques en compression supérieures à 25

MPa à 28 jours.

La réaction chimique de formation de l'ettringite est la suivante :

$$6Ca^{2+} + 2Al(OH)_4^- + 3SO_4^{2-} + 4OH^- +$$

$$26H_2O \rightarrow 3CaO.Al_2O_3.3CaSO_4.32H_2O$$

Le produit de solubilité de l'ettringite à l'équilibre est : $K_{ett} = 4,9 \times 10^{-44}$. La vitesse de formation de l'ettringite (taux de nucléation et croissance des cristaux d'ettringite) est dépendante de plusieurs paramètres, dont le coefficient de sursaturation $\beta$, relié à l'énergie disponible à la formation des nuclei :

$$\beta = (a_{Ca2+})^6 * (a_{Al(OH)4-})^2 * (a_{SO42-})^3 * (a_{OH-})^4 / K_{ett}$$

où $a_i$ représente les activités des ions i.

L'ettringite peut être obtenue par l'hydratation de compositions comprenant des aluminates de calcium et une source de sulfate, et éventuellement du ciment Portland et/ou de la chaux qui apportent en solution les ions nécessaires à la réalisation de cette réaction chimique. Les aluminates de calcium sont des combinaisons d'oxyde d'aluminium $Al_2O_3$, représenté par A dans la notation cimentière, et d'oxyde de calcium CaO, représenté par C dans cette même notation cimentière, ces oxydes étant cristallisés notamment sous la forme C3A, C12A7 et CA.

En pratique aujourd'hui les formulations de mortiers à durcissement et séchage rapides comprennent une association d'aluminates de calcium, de sulfate de calcium et de ciment Portland, avec des proportions de chacun des constituants délicates à définir car il faut pouvoir maîtriser l'hydratation sous forme d'ettringite, de manière à réaliser le meilleur compromis entre la quantité d'ettringite formée qui garantit la capacité de séchage du produit (quantité d'eau de gâchage cristallisée sous forme d'hydrates importante) et la morphologie de cette ettringite, laquelle, pour une densité de cristaux donnée, garantit le niveau de résistances mécaniques et le contrôle des variations dimensionnelles tout au long du processus de durcissement jusqu'à long terme. Ce compromis est d'autant plus difficile à réaliser que les niveaux de rapidité d'acquisition des résistances que l'on souhaite atteindre doivent être compatibles avec les caractéristiques de mise en oeuvre attendue, notamment le temps de maintien de l'ouvrabilité.

Ce compromis n'est pas obtenu de manière satisfaisante dans les mortiers de l'art antérieur.

Ainsi, par exemple, le brevet US 4,350,533 décrit des compositions de ciments ettringitiques à base de ciments d'aluminates de calcium, de sulfate de calcium, notamment sous forme de gypse, et éventuellement de chaux amenée de manière séparée et de ciment Portland. Mais la cinétique de développement des résistances mécaniques est très inférieure à celle recherchée dans le cadre de la présente invention.

Il est connu, pour les applications dites de « Mine Packing » (où l'on cherche à combler les cavités qui apparaissent dans les ouvrages souterrains), d'utiliser des mélanges ettringitiques d'aluminates de calcium et de sulfate de calcium. Mais les contraintes du système sont très différentes des applications « mortiers denses » de l'invention : le produit doit être pompable, faire prise rapidement, mais avec un rapport eau/solides de l'ordre de 5 (l'important dans cette application étant de faire beaucoup de volume), les résistances mécaniques en compression à 24 heures ne dépassent pas 5 MPa. De même, la durabilité du système n'est pas un critère clé, pas plus que les variations dimensionnelles. Les contraintes existantes dans les applications « mortiers denses » sont telles qu'il n'est pas possible d'utiliser ces solutions « mine packing » directement, elles doivent être reformulées et adaptées aux contraintes des systèmes denses.

L'invention a donc pour but de remédier aux inconvénients de l'état de la technique en proposant un liant ettringitique comprenant du sulfate de calcium et un composé minéral d'aluminates de calcium, permettant de réaliser dans des milieux denses le meilleur compromis possible entre le temps de maintien de l'ouvrabilité et la cinétique d'acquisition des résistances mécaniques.

Un autre avantage de l'invention est de permettre une remise en service rapide des ouvrages, tout en conservant une ouvrabilité équivalente à celle obtenue avec les mortiers de l'art antérieur. Pour des formulations contenant des liants ayant une même teneur en alumine, un même taux de liant, et une finesse Blaine de l'aluminate de calcium identique, l'acquisition des résistances mécaniques est ainsi beaucoup plus rapide et le temps de remise en circulation piétonne est deux fois plus court avec les mortiers réalisés avec le liant selon l'invention qu'avec les mortiers réalisés avec un liant selon l'art antérieur.

L'invention a donc pour but de fournir un liant ettringitique pour mortier dense, ledit mortier présentant de préférence au moment du gâchage avec l'eau un rapport pondéral eau/solides inférieur à 0,5, ledit liant comprenant des sulfates de calcium et un composé minéral d'aluminates de calcium, les aluminates et les sulfates et leur concentration dans le liant étant tels que les ions respectivement calcium et aluminium sont libérés dans des proportions optimales simultanément et régulièrement tout au long du processus d'hydratation, conduisant à la formation d'ettringite sans le blocage précoce aux interfaces grains anhydres-eau, qui gêne la dissolution des grains anhydres et diminue par conséquence le rendement de formation de l'ettringite.

En effet, la formation de l'ettringite résulte directement des vitesses de dissolution relatives des constituants solubles qui détermineront les proportions entre les ions calcium, aluminium et sulfate dans la solution. La concentration en ion calcium agit au premier ordre sur la cinétique de formation de l'ettringite ; lorsqu'elle est élevée la formation d'ettringite peut être extrêmement rapide, voire flash et donc se produire instantanément autour des phases anhydres contenant les autres ions nécessaires, c'est-à-dire les sulfates ou les aluminates selon les cas. Ce phénomène de blocage des interfaces réactionnelles est particulièrement critique en milieu dense, et lorsqu'il y a de gros écarts entre les vitesses de libération des ions calcium des différentes espèces solubles et/ou de gros écarts entre les vitesses de libération des ions calcium, aluminium et sulfates. Afin d'obtenir la performance souhaitée pour les mortiers, et notamment pour les mortiers denses, il faut éviter la formation précoce et très rapide d'ettringite autour des grains les moins solubles, qui empêche alors le déroulement normal de l'hydratation et conduit à un mortier dense ne répondant pas au cahier des charges, notamment en terme de performances mécaniques à court terme.

Ce phénomène de blocage des interfaces réactionnelles est l'une des raisons expliquant que les solutions utilisées en milieu dilué ne sont pas transposables aux milieux denses : en effet, en milieu dilué, la dissolution des différentes phases solubles est grandement facilitée, ce qui diminue la probabilité de formation de l'ettringite au contact des grains.

De la même façon, les liants ettringitiques classiques, comprenant du ciment Portland et/ou de la chaux, du sulfate de calcium et des ciments alumineux, ne donnent pas les meilleurs rendements de cinétique de durcissement. En effet, le ciment Portland comprend des sources de calcium de nature minéralogique et de solubilité très différentes, tels que la chaux libre, le C3S, le C2S, des sulfates de calcium, ainsi que des espèces mineures, tels que des sulfates alcalins, extrêmement solubles qui modifient significativement la solubilisation des phases contenant du calcium. Ceci ne permet donc pas un apport de calcium constant tout au long du processus d'hydratation.

En ce qui concerne la chaux, sa dissolution trop rapide limite la solubilisation des phases contenant des aluminates. Un excès de chaux a aussi des conséquences fortes sur les variations dimensionnelles (très forte expansion) et sur la morphologie de l'ettringite formée, qui devient plus massive, donc moins structurante (les résistances mécaniques sont diminuées). Son taux d'introduction dans le mélange est donc limité, ce qui limite d'autant le rendement de fabrication de l'ettringite pour une teneur en sulfate ou en aluminate donnée, et donc la performance de durcissement et de séchage rapides.

De même, un excès de sulfate de calcium par rapport aux phases contenant des aluminates de calcium conduit aux mêmes effets que la chaux, c'est-à-dire à des résistances mécaniques moindres et à de fortes variations dimensionnelles. Cela s'explique en partie par le fait que la solubilisation des sulfates de calcium libère des quantités importantes de calcium dans la phase aqueuse. Aussi, des compositions comprenant les phases aluminates de calcium et sulfate de calcium dans les proportions stoechiométriques (rapport molaire sulfate de calcium/oxyde d'aluminium A égal à 3) ne peuvent permettre la réalisation de mortiers denses avec de bonnes propriétés de durcissement et des variabilités dimensionnelles maîtrisées.

La maîtrise de l'hydratation du mortier passe donc tout d'abord par le contrôle du taux d'apport de calcium relativement aux autres espèces ioniques, et notamment l'aluminium.

L'invention concerne donc un liant ettringitique pour mortier dense comprenant des sulfates de calcium et un composé minéral d'aluminates de calcium, ledit composé minéral d'aluminates de calcium comprenant des oxydes de calcium C et d'aluminium A, solubles et combinés en une ou plusieurs phases minéralogiques cristallisées et/ou amorphes, dans des proportions telles que :

- le rapport molaire C/A utile du composé minéral d'aluminates de calcium est compris entre 1,2 et 2,7 ;
- la somme en poids des phases (C+A) utiles représente au moins 30% du poids total du composé minéral, et
- le rapport molaire sulfate de calcium/oxyde d'aluminium A dans le liant ettringitique est compris entre 0,5 et 2.

De préférence, le rapport pondéral composé minéral d'aluminates de calcium/sulfate de calcium est compris entre 0,5 et 4, mieux entre 1,5 et 3.

Selon un mode de réalisation préféré, le rapport molaire C/A utile du composé minéral d'aluminates de calcium est compris entre 1,3 et 2,5, mieux entre 1,6 et 2.

Par ailleurs, avantageusement, le rapport molaire sulfate de calcium/oxyde d'aluminium A dans le liant ettringitique est compris entre 0,6 et 1,8, de préférence entre 0,8 et 1,7.

Par oxydes C et A utiles, on entend les oxydes C et A qui, lorsqu'ils sont mis en solution, en mélange avec les autres constituants choisis de la composition du mortier, parmi lesquels le sulfate de calcium, donnent un coefficient de sursaturation $\beta>1$.

Par phase utile, on entend une phase qui libère des oxydes C et A utiles.

Ainsi, les phases C2AS, les ferrites, ne sont pas des phases utiles (on les appelle "phases inertes"). A contrario, les phases C12A7, C3A, les verres, C4A3$ (où $ représente SO3 en notation cimentière), CA, par exemple, sont des phases utiles.

Le rapport molaire C/A utile du composé minéral d'aluminates de calcium est donc le rapport molaire de la totalité des oxydes C et A du composé minéral d'aluminates de calcium qui se trouvent dans les phases utiles. De même, la somme en poids des phases (C+A) utiles est la somme en poids des phases comprenant les oxydes C et A et qui sont des phases utiles.

L'apport des ions calcium et aluminium en solution se fait ainsi tout au long de la réaction dans les proportions déterminées par le rapport molaire C/A utile du composé minéral d'aluminates de calcium.

Selon un mode de réalisation préféré, le mortier dense comprenant le liant ettringitique présente au moment du gâchage avec l'eau un rapport pondéral eau/solides inférieur à 0,5.

Le liant ettringitique selon l'invention permet d'obtenir d'excellents rendements de formation d'ettringite et donc une bonne cinétique de durcissement sans nécessiter, pour la formulation du mortier, de source complémentaire d'ions calcium. Un autre avantage en s'affranchissant de cette source complémentaire de calcium, qui peut être soit de la chaux, soit du ciment Portland, est que l'on obtient des compositions de mortier plus régulières en performance sur les critères importants de l'application, le ciment Portland notamment ayant une teneur très variable en espèces mineures, dont l'impact sur la formation d'ettringite est déterminant.

Ainsi, de préférence, les mortiers comprenant le liant ettringitique selon l'invention ne comprennent pas de ciment Portland ni de chaux hydraulique. Ils peuvent néanmoins tolérer un faible pourcentage de chaux hydraulique et/ou de ciment Portland, dans une limite de 3,5% en poids par rapport au poids total du mortier sec.

Selon un mode de réalisation préféré, la somme en poids des phases (C+A) utiles représente au moins 50% en poids du poids total du composé minéral d'aluminates de calcium.

Le composé minéral d'aluminates de calcium compris dans le liant utilisé pour formuler le mortier peut être obtenu par cuisson de matières riches en oxyde d'aluminium A, dont les bauxites, et de calcaire, dans un four à une température supérieure à 1100°C. Il peut être obtenu sous forme d'un ou plusieurs clinkers fondus ou frittés qui peuvent contenir des phases cristallisées ou des phases amorphes ou résulter d'un mélange de différents composés minéraux comprenant des aluminates de calcium, eux-mêmes obtenus par cuisson ou non. Le four utilisé peut être tout type de four classiquement utilisé pour la formation des clinkers, tel que les fours réverbères, les fours à tunnel, les fours rotatifs ou les fours électriques, à induction ou à arc électrique.

Le composé minéral d'aluminates de calcium peut être sous une phase minéralogique cristallisée choisie parmi CA, C12A7, C3A, C4A3$ ou sous une phase amorphe, ou sous la forme d'un mélange d'au moins une desdites phases minéralogiques cristallisées et d'une phase amorphe. De préférence, le composé minéral comprend au moins 30% en poids de C12A7, de préférence encore au moins 50% en poids de C12A7, mieux de 50% à 85% en poids de C12A7, par rapport au poids total du composé minéral.

Le composé minéral d'aluminates de calcium peut également comprendre au moins une phase minéralogique cristallisée choisie parmi C2A(1-x)Fx, C2S, C2AS, C3S et leurs mélanges, où F et S représentent respectivement $Fe_2O_3$ et $SiO_2$ en notation cimentière, et où x est un entier appartenant à] 0 ; 1].

Le composé minéral d'aluminates de calcium peut être broyé et peut alors présenter une surface spécifique Blaine supérieure ou égale à 1500 $cm^2/g$, de préférence comprise entre 2000 et 5000 $cm^2/g$.

Le sulfate de calcium convenant pour le liant peut provenir des anhydrites, du gypse, des semi-hydrates et de leurs mélanges.

Le liant comprenant le composé minéral d'aluminates de calcium selon l'invention permet d'obtenir, après ajout de granulats et d'additifs, un mortier sec.

Le mortier sec comprend :

- liant selon l'invention : de 15% à 75% en poids par rapport au poids total du mortier sec,
- fillers calcaires ou sables siliceux : de 25 à 85% en poids par rapport au poids total du mortier sec,
- chaux et/ou ciment Portland : de 0% à 3,5% en poids par rapport au poids total du mortier sec,
- polymères en poudre redispersable : de 0% à 8% en poids par rapport en poids total du mortier sec, et/ou : polymères en dispersion solide-liquide : de 0% à 20% en poids par rapport au poids total du mortier sec,
- des additifs de rhéologie et/ou des additifs régulateurs de prise.

De préférence, le mortier sec comprend :

- liant selon l'invention : de 20% à 50% en poids par rapport au poids total du mortier sec,
- fillers calcaires ou sables siliceux : de 50 à 80% en poids par rapport au poids total du mortier sec,
- chaux et/ou ciment Portland : de 0% à 0,5% en poids par rapport au poids total du mortier sec,
- polymères en poudre redispersable : de 0% à 5% en poids par rapport au poids total du mortier sec, et/ou : polymères en dispersion solide-liquide : de 0% à 15% en poids par rapport au poids total du mortier sec,
- des additifs de rhéologie et/ou des additifs régulateurs de prise.

Les polymères en poudre peuvent être choisis parmi les copolymères d'acétate de vinyle, versatates de vinyle et d'éthylène, disponibles par exemple auprès des sociétés Wacker ou Elotex, et les alcools polyvinyliques.

Les polymères en dispersion solide-liquide peuvent être choisis parmi les dispersions styrène-butadiène, styrène acryliques, acryliques, acétates de vinyle, et versatate de vinyle et d'éthylène, disponibles par exemple auprès de la société Rohm & Haas.

Les additifs de rhéologie sont des constituants classiques des mortiers qui ont pour objet d'améliorer la rhéologie initiale du mortier gâché. Parmi ces additifs de rhéologie, on peut citer la caséine, les mélamines formaldéhydes sulfonées, les phosphonates polyoxyéthylénés (POE), les polycarbonates polyoxyde d'éthylène (PCP), et leurs mélanges. Ces additifs sont des produits disponibles dans le commerce. A titre d'exemple, on peut citer les produits OPTIMA 100® et PREMIA 150® , commercialisés par la société CHRYSO, ou MELMENT F10® , MELFLUX PP100F® commercialisés par la société SKW.

Les additifs de rhéologie représentent de préférence de 0,1 à 0,5% du poids total du mortier sec. Ils sont souvent associés à des polymères hydrosolubles, dont la fonction est de limiter la ségrégation, tels que des éthers de cellulose, mais aussi les gommes welan, les polysaccharides.

Les additifs régulateurs de prise peuvent être des accélérateurs de prise ou des retardateurs de prise. Ils représentent de préférence de 0,1 à 0,5% du poids total du mortier sec. De préférence, on peut utiliser de l'acide tartrique, en combinaison avec du gluconate de sodium comme retardateur de prise.

Le mortier sec permet d'obtenir, par gâchage avec de l'eau, un mortier humide. De préférence, la quantité d'eau est telle que le rapport pondéral eau/solides est inférieur à 0,5.

L'invention est illustrée et détaillée par les exemples suivants. Dans tous les exemples, le rapport C/A utile est un rapport molaire ; le pourcentage (C+A) utile est exprimé en poids par rapport au poids total du composé minéral ; le rapport sulfate de calcium/$Al_2O_3$ est un rapport molaire ; la quantité d'eau de gâchage est donnée en pourcentage en poids par rapport au poids total des constituants secs du mortier.

**Exemple 1- Comparatifs 2,3,4,5**

On réalise un mortier, comprenant un liant selon l'invention (essai N°1). A titre de comparaison, on réalise des mortiers à partir de liants appartenant à l'état de la technique (essais N°2,3,4,5).

Le tableau 1 présente la composition des liants.

Tableau 1

| N° essai | 1 | 2 | 3 | 4 | 5 |
|---|---|---|---|---|---|
| Composé minéral d'aluminates de calcium (SSB = 3000 $cm^2/g$) :<br>- C/A utile<br>- (C+A) utiles (%)<br>- phases majoritaires<br>- quantité (% en poids) | <br>1,77<br>87<br>C12<br>A7 65 | <br>1<br>55<br>CA<br>54 | <br>1<br>55<br>CA<br>65 | <br>1<br>55<br>CA<br>63 | <br>1<br>55<br>CA<br>63 |
| Sulfate de Calcium* (% en poids) | 35 | 36 | 35 | 33,5 | 33,5 |
| Sulfate de Calcium/$Al_2O_3$(rapport molaire) | 0,85 | - | - | - | - |
| Source complémentaire d'ions calcium :<br>- nature**<br>- quantité (% en poids) | <br><br>-<br>- | <br><br>P/C<br>5 / 5 | <br><br>-<br>- | <br><br>C<br>3,5 | <br><br>P<br>3,5 |
| * Sulfate de calcium : semi-hydrate à 95% de pureté<br>** P = Ciment Portland CEM I 52.5 CP2 ; C = Chaux | | | | | |

Le tableau 2 présente la composition des mortiers comprenant les liants du tableau 1.

Tableau 2

| Sable AFNOR | 1350 g |
|---|---|
| Liant | 675g |
| Gluconate de Sodium | 2,025g |
| $Li_2CO_3$ | 2,025g |
| Eau | 270g |

Le tableau 3 présente les caractéristiques rhéologiques et mécaniques des mortiers obtenus.

Tableau 3

| N° Essai | 1 | 2 | 3 | 4 | 5 |
|---|---|---|---|---|---|
| DP* Vicat | 20 min | 12 min | 45 min | 45 min | 50 min |
| Rc** 3h (MPa) | 30 | 4,0 | 5 | 2 | 8,5 |
| Rc 24h (Mpa) | 46 | 3,5 | 28 | 2 | 31,5 |
| Rc 28j (Mpa) | 60 | 11,5 | 47,5 | 15,5 | 50 |
| Observations | RAS | Fissures à 28j | RAS | RAS | RAS |
| * DP Vicat : début de prise mesurée selon la méthode "Vicat"<br>** Rc = Résistances en compression, mesurées sur des éprouvettes de dimension 4x4x16cm. | | | | | |

Ces essais montrent que les mortiers comprenant le liant selon l'invention ont de très bonnes résistances mécaniques en compression à court terme, tout en ayant un temps de prise suffisamment long et ajustable par le choix du dosage en retardateur.

On voit également que les mortiers selon l'art antérieur, comprenant des ciments alumineux usuels (phase CA majoritaire) et un apport complémentaire de ciment Portland et/ou de chaux, ne permettent pas, pour des temps de prise équivalents, d'obtenir de résistances mécaniques satisfaisantes à court terme (4 à 8 MPa, à comparer à 30 MPa pour le mortier comprenant le liant selon l'invention).

De même, dans certains cas en présence de chaux, les résistances à long terme restent d'un niveau très faible.

**Exemple 6 - Comparatifs 7, 8**

On réalise un mortier, avec un liant selon l'invention (N°6), et deux mortiers de l'art antérieur, à titre comparatif, réalisés avec un liant de l'art antérieur (N°7, 8),

Les compositions des mortiers et leurs caractéristiques rhéologiques et mécaniques sont représentées dans le tableau 4.

Tableau 4

| N° Essai | 6 | 7 | 8 |
|---|---|---|---|
| Composé minéral d'aluminates de calcium (SSB : 3000cm$^2$/g) :<br>- C/A utile<br>- (C+A) utiles (%)<br>- phases majoritaires<br>- quantité (% en poids) | <br>1,77<br>87<br>C12A7<br>19 | <br>1<br>70<br>CA<br>22,5 | <br>1<br>70<br>CA<br>19 |
| Sulfate de Calcium (% en poids) | 11 | 7,5 | 11 |
| Sulfate de Calcium/$Al_2O_3$(rapport molaire) | 0,92 | - | - |
| Laitier (% en poids) | 20 | 20 | 20 |
| Sable siliceux (% en poids) | 47,25 | 47,25 | 47,25 |
| RE523Z (% en poids) | 2 | 2 | 2 |
| Lifetech 115 (% en poids) | 0,1 | 0,1 | 0,1 |
| Citrate trisodique (% en poids) | 0,1 | 0,1 | 0,1 |
| Melment F10 (% en poids) | 0,3 | 0,3 | 0,3 |
| Gluconate de Sodium (% en poids) | 0,05 | 0,05 | 0,05 |
| MT400PFV (% en poids) | 0,05 | 0,05 | 0,05 |
| Dehydran 1922 (% en poids) | 0,15 | 0,15 | 0,15 |
| Eau | 20 | 20 | 20 |
| DP Vicat (min) | 105 | 60 | 65 |
| Rc 4h (MPa) | 14,5 | 9,5 | 11 |
| Rc 24h (MPa) | 25,5 | 20,5 | 21 |
| Rc 7 jours (MPa) | 41 | 28,5 | 28,5 |
| Retrait à 7 jours (mm/m) | -0,6 | -1,6 | -1,05 |
| Ettringite formée à 7 jours (J/g) | 135 | 70 | 110 |
| Anhydrite résiduelle à 7 jours | 315 | 280 | 500 |

Le sulfate de calcium est de l'anhydrite à 95% de pureté.

Le laitier est un laitier de haut-fourneau.

Le sable siliceux provient de la société Sifraco, il est commercialisé sous le nom Sable NE14, sa granulométrie est inférieure à 500μm (d50 = 210 μm).

RE523Z est une résine commercialisée par la société Wacker. C'est un copolymère d'acétate de vinyle et d'éthylène.

Lifetech 115 : il s'agit de carbonate de lithium, commercialisé par FMC.

Melment F10 : mélamine formaldéhyde sulfonée commercialisée par SKW.

Gluconate de sodium : commercialisé par Roquettes Frères.

MT400PFV : éther de cellulose commercialisé par Wolf Walsrode.

Dehydran 1922 : antimousse commercialisé par Rhodia.

La quantité d'anhydrite résiduelle (donnée dans une unité arbitraire) est mesurée par la hauteur du pic obtenu par Diffraction X.

La quantité d'ettringite formée est mesurée par le flux de chaleur dégagé en DSC (Differential Scanning Calorimetry).

Le retrait est mesuré à 7 jours, sur des éprouvettes 2 x 2 x 16 cm conservées à 20°C et 50% d'humidité relative.

Les résistances mécaniques sont mesurées sur des éprouvettes 2 x 2 x 16 cm, conservées à 20°C et 70% d'hygrométrie.

On voit que le composé minéral d'aluminates de calcium selon l'invention permet d'obtenir un bien meilleur compromis de performances :

- la cinétique d'acquisition des résistances mécaniques est bien meilleure qu'avec les mortiers formulés avec des composés minéraux de l'art antérieur,
- le contrôle des variations dimensionnelles est également meilleur,
- on a un meilleur rendement de formation d'ettringite comme en témoigne la quantité plus importante d'ettringite formée, et la moindre quantité d'anhydrite résiduelle.

**Exemples 9, 10 et comparatif 11**

On réalise des mortiers de réparation comportant le liant selon l'invention (Essais 9 et 10), et un mortier comparatif de l'art antérieur (essai 11). Leurs compositions sont données dans le tableau 5.

Tableau 5

| N° Essai | 9 | 10 | 11 |
|---|---|---|---|
| Composé minéral d'aluminates de calcium (SSB : 3000cm$^2$/g) :<br>- C/A utile<br>- (C+A) utiles (%)<br>- phases majoritaires<br>- quantité (% en poids) | <br>1,77<br>87<br>C12A7<br>28 | <br>1,77<br>87<br>C12A7<br>30 | <br>1<br>70<br>CA<br>33 |
| Sulfate de Calcium (% en poids) | 15 | 13 | 10 |
| Sulfate de Calcium/$Al_2O_3$(rapport molaire) | 0,85 | 0,69 | - |
| Sable siliceux Palvadeau 0 - 315μm (% en poids) | 19 | 19 | 19 |
| Sable siliceux Palvadeau 315μm - 1mm (% en poids) | 19 | 19 | 19 |
| Sable siliceux Palvadeau 1- 4 mm (% en poids) | 19 | 19 | 19 |
| Gluconate de sodium (% en poids) | 0,1 | 0,1 | 0,1 |
| Acide tartrique (% en poids) | - | 0,15 | - |
| $Li_2CO_3$ (% en poids) | 0,1 | 0,05 | 0,1 |
| TOTAL | 100 | 100 | 100 |
| Eau | 17,2 | 17,2 | 17,2 |

Sulfate de calcium : semi-hydrate à 95% de pureté

Les caractéristiques rhéologiques et mécaniques du mortier sont données dans le tableau 6.

Tableau 6

| N° Essai | 9 | 10 | 11 |
|---|---|---|---|
| DP Vicat<br>FP Vicat | 15 min<br>22 min | 48 min<br>62 min | 35 min<br>45 min |

Suite de tableau

| N° Essai | 9 | 10 | 11 |
|---|---|---|---|
| Rc 4h (MPa) | 37 | 33 | 14 |
| Rc 24h (MPa) | 51 | 45 | 40 |
| Rc 28j (MPa) | 61 | 52 | 55 |

FP Vicat : Fin de Prise Vicat

Les résistances mécaniques sont mesurées sur des éprouvettes 4 x 4 x 16 cm, conservées à 20°C et 70% d'hygrométrie.

On voit que les mortiers comprenant le liant selon l'invention ont une bien meilleure cinétique d'acquisition des résistances (Résistances à 4 heures) et ceci pour des temps de prise équivalents.

## Exemple 12

On réalise un mortier colle comportant le liant selon l'invention. Sa composition est donnée dans le tableau 7.

Tableau 7

| N° Essai | 12 |
|---|---|
| Composé d'aluminates de calcium (SSB : 3000cm$^2$/g)<br>- C/A utile<br>- (C+A) utiles (%)<br>- phases majoritaires<br>- quantité (% en poids) | <br>1,77<br>87<br>C12A7<br>26,5 |
| Sulfate de Calcium (% en poids) | 13,5 |
| Sulfate de Calcium/$Al_2O_3$(rapport molaire) | 0,81 |
| Durcal 15 (% en poids) | 9 |
| Sable siliceux Sifraco NE14 (% en poids) | 48,65 |
| RE530Z (% en poids) | 1,5 |
| Tylose MH3001 P6 (% en poids) | 0,35 |
| Citrate trisodique (% en poids) | 0,2 |
| Bicarbonate de sodium (% en poids) | 0,2 |
| $Li_2CO_3$ (% en poids) | 0,1 |
| TOTAL | 100 |
| Eau | 25,5 |

Sulfate de calcium : semi-hydrate à 95% de pureté

Durcal 15 : carbonate de calcium commercialisé par OMYA ayant une taille de grains d50 de 15 μm, avec 1% des grains ayant une taille supérieure à 100 μm.

RE530Z est une résine commercialisée par la société Wacker. C'est un copolymère d'acétate de vinyle et d'éthylène.

Tylose MH3001 P6 : éther de cellulose commercialisée par Clariant.

Les propriétés mécaniques sont présentées dans le tableau 8.

Tableau 8

| N° Essai | 12 |
|---|---|
| Temps ouvert sur dalle | 20 min |
| DP Vicat | 45 min |

Suite de tableau

| N° Essai | 12 |
|---|---|
| Adhérence à 4h (MPa) | 0,5 |
| Adhérence à 24h (MPa) | 1,2 |
| Adhérence à 28j (MPa) | 2,1 |

L'adhérence est mesurée avec un dynamomètre SATTEC selon le mode opératoire décrit dans le Cahier des Prescriptions Techniques d'exécution « Revêtements de sols intérieurs et extérieurs en carreaux céramiques ou analogues collés au moyen de mortiers colles » Cahiers du CSTB 3267.

On obtient un produit avec un temps ouvert de 20 minutes et de bonnes propriétés mécaniques.

## Exemple 13

On réalise une chape fluide rapide avec un composé minéral d'aluminates de calcium selon l'invention et du gypse (essai 13).

La composition et les résultats rhéologiques et mécaniques sont rassemblés dans le tableau 9.

Tableau 9

| N° Essai | 13 |
|---|---|
| Composé d'aluminates de calcium (SSB = 2010 $cm^2/g$) :<br>- C/A utile<br>- (C+A) utiles (%)<br>- phases majoritaires<br>- quantité (% en poids) | <br>1,77<br>87<br>C12A7<br>14,3 |
| Sulfate de Calcium (% en poids) | 7,2 |
| Sulfate de Calcium/$Al_2O_3$(rapport molaire) | 0,80 |
| Source complémentaire d'ions calcium :<br>- nature<br>- quantité (% en poids) | <br>C<br>0,2 |
| Sable siliceux 1- 4 mm (% en poids) | 49,4 |
| Sable siliceux 0 - 315 $\mu$m (% en poids) | 15,3 |
| E10 (% en poids) | 8,0 |
| D130 (% en poids) | 3,9 |
| RE523Z (% en poids) | 1 |
| Dehydran 1922 (% en poids) | 0,1 |
| Ether de cellulose (% en poids) | 0,07 |
| $Li_2CO_3$ (% en poids) | 0,05 |
| Caséine (% en poids) | 0,3 |
| $K_2SO_4$ (% en poids) | 0,2 |
| Gluconate de sodium (% en poids) | 0,06 |
| Acide Tartrique (% en poids) | 0,12 |
| TOTAL | 100 |
| Eau | 14 |
| Auto Etalement 7 min (mm) | 260 |
| Auto Etalement 20 min (mm) | 260 |

Suite de tableau

| N° Essai | 13 |
|---|---|
| Temps ouvert (min) | 95 |
| DP Vicat (min) | 115 |
| FP Vicat (min) | 145 |
| Rc 5h (MPa) | 15,8 |
| Rc 24h (MPa) | 20,3 |

C : Chaux, commercialisée par Balthazar & Cotte
Sulfate de calcium : gypse à 95% de pureté
Sable siliceux : sable Palvadeau
E10 : sable siliceux Sifraco de taille de grains d50 = 21 µm.
D130 : Durcal 130, calcaire commercialisé par OMYA, 76% des grains ayant une taille supérieure à 100 µm, et 0,2% des grains ayant une taille inférieure à 500 µm.
Caséine : commercialisée par Unilait.

L'auto Etalement est mesuré avec un cône tronconique ASTM (décrit dans la norme ASTM C230).

Le temps ouvert correspond au temps au bout duquel la pâte a perdu sa capacité à s'écouler d'elle-même. Les résistances mécaniques sont mesurées sur des éprouvettes 4 x 4 x 16 cm, conservées à 20°C et 70% d'hygrométrie.

Les propriétés rhéologiques (étalement) de la chape sont bonnes, et même avec un temps ouvert très long (1h30), la cinétique de durcissement reste très rapide et ce, malgré l'absence de ciment Portland et une faible surface spécifique Blaine du composé minéral d'aluminates de calcium selon l'invention.

**Exemples 14, 15 - Comparatifs 16, 17, 18 et 19**

On réalise des enduits de lissage avec des composés minéraux d'aluminates de calcium et de sulfate de calcium selon l'invention (essais 14, 15) que l'on compare à des mélanges témoin à base de composés minéraux d'aluminates de calcium de l'art antérieur et de ciment Portland (essais 16, 17, 18, 19). Les compositions sont rassemblées dans le tableau 10.

Pour faciliter la comparaison des performances entre les mortiers de l'art antérieur et les mortiers, on fait apparaître dans le tableau 10 la quantité totale, en poids, d'alumine dans le liant.

Tableau 10

| | Invention | | Art antérieur | | | |
|---|---|---|---|---|---|---|
| N° Essai | 14 | 15 | 16 | 17 | 18 | 19 |
| Composé d'aluminates de calcium (SSB : 3000cm$^2$/g) :<br>- C/A utile<br>- (C+A) utiles (%)<br>- phases majoritaires<br>- quantité (% en poids) | <br>1,77<br>87<br>C12A7<br>18 | <br>1,77<br>87<br>C12A7<br>17 | <br>1<br>55<br>CA<br>20 | <br>1<br>70<br>CA<br>20 | <br>1<br>55<br>CA<br>20 | <br>1<br>70<br>CA<br>20 |
| Source complémentaire d'ions calcium<br>- nature<br>- quantité (% en poids) | <br>-<br>- | <br>C<br>0,4 | <br>P<br>4 | <br>P<br>4 | <br>P/C<br>6/0, 2 | <br>P/C<br>6/0, 2 |
| % d'alumine total | 7,4 | 7 | 8 | 10,6 | 8,1 | 10,7 |
| Sulfate de Calcium (% en poids) | 9 | 7 | 7 | 7 | 7 | 7 |
| Sulfate de Calcium/$Al_2O_3$(rapport molaire) | 0,79 | 0,65 | - | - | - | - |
| Durcal 15 (% en poids) | 23 | 27 | 19 | 19 | 18 | 18 |
| Durcal 130 (% en poids) | 9 | 10 | 9 | 9 | 10 | 10 |
| NE14 (% en poids) | 37,8 | 36 | 37,8 | 37,8 | 36 | 36 |
| RE523Z (% en poids) | 2 | 2,5 | 2 | 2 | 2,5 | 2,5 |

Suite de tableau

| | Invention | | Art antérieur | | | |
|---|---|---|---|---|---|---|
| N° Essai | 14 | 15 | 16 | 17 | 18 | 19 |
| $Li_2CO_3$ (% en poids) | 0,05 | 0,05 | 0,1 | 0,1 | 0,05 | 0,05 |
| Acide citrique (% en poids) | - | - | 0,02 | 0,02 | - | - |
| Acide tartrique (% en poids) | 0,075 | 0,1 | 0 | 0 | 0,07 | 0,07 |
| Melflux PP100F (% en poids) | 0,2 | - | 0,2 | 0,2 | - | - |
| Ether de cellulose MT400PFV (% en poids) | 0,06 | 0,06 | 0,05 | 0,07 | 0,06 | 0,06 |
| Dehydran 1922 (% en poids) | 0,1 | 0,1 | 0,1 | 0,1 | 0,1 | 0,1 |
| $K_2SO_4$ (% en poids) | - | 0,2 | - | - | 0,2 | 0,2 |
| Caséine (% en poids) | - | 0,4 | - | - | 0,4 | 0,4 |
| Gluconate de soude (% en poids) | - | 0,06 | - | - | 0,03 | 0,03 |
| Eau | 24 | 24 | 24 | 24 | 24 | 24 |

Sulfate de calcium : semi-hydrate à 95% de pureté.
P : ciment Portland CPA CEM I 52.5 CP2 ; C = Chaux.
Durcal 15 : calcaire commercialise par OMYA.
Durcal 130 : calcaire commercialisé par OMYA.

Les propriétés mécaniques et rhéologiques sont rassemblées dans le tableau 11.

Tableau 11

| | Invention | | Art antérieur | | | |
|---|---|---|---|---|---|---|
| N° Essai | 14 | 15 | 16 | 17 | 18 | 19 |
| Auto-Etalement 7 min (mm) | 144 | 148 | 150 | 151 | 143 | 149 |
| Auto-Etalement 20 min (mm) | 145 | 146 | 150 | 120 | 145 | 144 |
| Temps de gélification (min) | 29 | 42 | 30 | 26 | 50 | 45 |
| DP Vicat (min) | 35 | 55 | 80 | 35 | 120 | 95 |
| FP Vicat (min) | 40 | 65 | 90 | 40 | 140 | 120 |
| Remise en circulation[1] | 1h30 | 1 h30 | 3h | 2h30 | 3h | 3h |
| Rc 2h (MPa) | 5 | 10 | 1,5 | 3 | 1 | 0,5 |
| Rc 4h (MPa) | 17,5 | 12,5 | 4 | 7,5 | 6,5 | 6,5 |
| Rc 24h (MPa) | 24,5 | 18 | 18 | 24 | 15,5 | 17,5 |
| Rc 28j (MPa) | 38 | 29 | 28 | 35 | 28,5 | 29 |
| Délai de recouvrement[2] | 12h | 12h | 24h | 24h | 24h | 24h |
| Ettringite 4h[3] | - | 140 | - | - | 100 | 110 |
| Ettringite 24h[4] | - | 160 | - | - | 140 | 150 |
| Adhérence[5] | - | 2,8 | - | - | 2,3 | - |
| Retrait[6] | - | 0,8 | - | - | 1 | - |
| 1. Remise en circulation : temps au bout duquel la résistance mécanique en compression de l'enduit de lissage atteint 3Mpa. | | | | | | |

Suite de tableau

| |
|---|
| 2. Délai de recouvrement : temps au bout duquel l'enduit de lissage présente une humidité résiduelle (mesurée selon la méthode au carbure de calcium (dégagement d'acétylène par mise en contact avec l'humidité du matériau) à l'aide du CM Tester de Riedel & Haën) inférieure à 3%, mesuré en épaisseur de 9mm sur dalle béton à 23°C et 50% d'hygrométrie. |
| 3. Ettringite 4h : Quantité d'eau de gâchage cristallisée sous forme d'ettringite, en g / kg de produit formulé, à t = 4h00, mesurée selon la méthode au carbure de calcium (dégagement d'acétylène par mise en contact avec l'humidité du matériau) à l'aide du CM Tester de Riedel & Haën. |
| 4. Ettringite 24 h : Quantité d'eau de gâchage cristallisée sous forme d'ettringite, en g / kg de produit formulé, à t = 24h00. |
| 5. Adhérence : mesurée avec un dynanomètre Sattec selon le protocole opératoire décrit dans le guide technique pour l'avis technique et le classement P. Cahiers du CSTB, n° 2893, sur support béton à 28 jours, sans primaire d'accrochage, en Mpa. |
| 6. Retrait : retrait de séchage, mesuré à 28 jours, sur éprouvettes 2x2x16cm, stockées à 20°C - 70% d'humidité relative, en mm/m. |

Le temps de gélification et l'auto-étalement sont mesurés selon le protocole opératoire décrit dans le guide technique pour l'avis technique et le classement P. Cahiers du CSTB, n° 2893.

Les résistances mécaniques sont mesurées sur des éprouvettes 2 x 2 x 16 cm, conservées à 20°C et 70% d'hygrométrie.

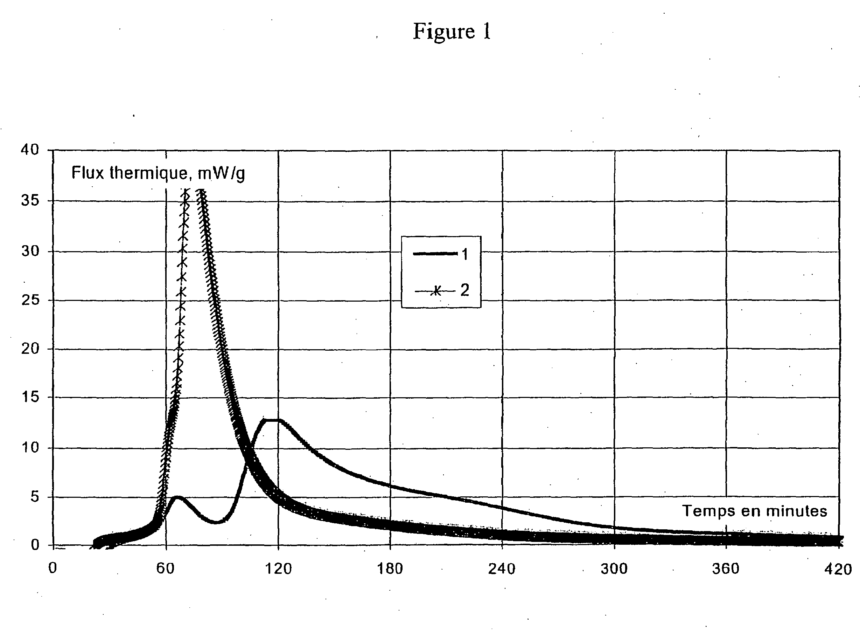

La figure 1 présente les courbes de flux thermique des essais 15 (courbe 2) selon l'invention et 18 (courbe 1) selon l'art antérieur, obtenues par microcalorimétrie isotherme. La quantité d'ettringite formée à court terme, est visualisée par le flux de chaleur dégagé par la réaction.

Les propriétés rhéologiques (étalement) sont bonnes avec les enduits de lissage comportant le liant de l'invention et ceux de l'art antérieur, mais les propriétés mécaniques (résistance en compression) sont nettement améliorées avec le liant selon l'invention.

Ainsi qu'il est illustré à la figure 1, l'ettringite est formée, dans le mortier formulé avec le liant de l'invention, en un temps beaucoup plus court qu'avec le mortier formulé avec le liant selon l'art antérieur et en une seule étape, contrairement au mortier formulé avec le liant selon l'art antérieur.

De plus le composé minéral d'aluminates de calcium selon l'invention permet, sans apport complémentaire de ciment portland dans le liant et avec une teneur en alumine totale dans la composition plus faible, d'avoir un temps de remise en service deux fois plus rapide.

Enfin, les performances à terme, qu'il s'agisse du retrait de séchage, de la résistance en compression ou de l'adhésion au support sont elles aussi d'un niveau supérieur.

## Exemples 20, 21 et 22

On fabrique trois clinkers (A, B et C) comportant le liant selon l'invention, de minéralogie différente.

Les clinkers A et B sont fabriqués par fusion à partir de bauxite et de calcaire dans un creuset réfractaire à une température de 1400°C. Le clinker C est fabriqué par frittage à partir de bauxite, de calcaire et d'anhydrite dans un creuset réfractaire à une température de 1300°C pendant 2 heures.

Les compositions minéralogiques (exprimées en pourcentage en poids par rapport au poids total du clinker) de ces clinkers sont données dans le tableau 12 ci-dessous :

Tableau 12

| | | A | B | C |
|---|---|---|---|---|
| Phases utiles | CA | 5 | | |
| | C12A7 | 45 | 65 | 45 |
| | C3A | | 5 | |
| | C4A3$ | | | 40 |
| Phases inertes | | 50 | 30 | 15 |
| SSB | | 3010 | 2000 | 2900 |
| C/A utile | | 1,61 | 1,8 | 1,53 |
| C+A utile | | 50 % | 70 % | 85 % |

La composition des mortiers obtenus à partir de ces clinkers et leurs caractéristiques mécaniques et rhéologiques sont regroupées dans le tableau 13.

Tableau 13

| N° Essai | 20 | 21 | 22 |
|---|---|---|---|
| Composé d'aluminates de calcium (% en poids) | 20 | 20 | 20 |
| Sulfate de Calcium (% en poids) | 9 | 9 | 7 |
| Sulfate de Calcium/$Al_2O_3$(rapport molaire) | 1,21 | 0,91 | 0,73 |
| Durcal 15 (% en poids) | 22 | 22 | 24 |
| Durcal 130 (% en poids) | 8 | 8 | 8 |
| NE14 (% en poids) | 38,6 | 38,6 | 38,6 |
| RE523Z (% en poids) | 2 | 2 | 2 |
| $Li_2CO_3$ (% en poids) | 0,05 | 0,05 | 0,05 |
| Acide tartrique (% en poids) | 0,06 | 0,04 | 0,05 |
| Melflux PP100F (% en poids) | 0,15 | 0,1 | 0,15 |
| Ether de cellulose MT400PFV (% en poids) | 0,06 | 0,06 | 0,06 |
| Dehydran 1922 (% en poids) | 0.08 | 0.08 | 0.08 |
| Eau | 24% | 24% | 24% |
| Auto-Etalement 7 min (mm) | 150 | 148 | 148 |
| Auto-Etalement 20 min (mm) | 138 | 144 | 140 |
| Temps de gélification (min) | 23 | 30 | 35 |
| DP Vicat (min) | 32 | 40 | 42 |
| FP Vicat (min) | 35 | 55 | 52 |
| Rc 2h (MPa) | 3,5 | 5 | 3 |
| Rc 4h (MPa) | 4,5 | 7 | 10,5 |
| Rc 24h (MPa) | 17 | 17,5 | 20,5 |

Suite de tableau

| N° Essai | 20 | 21 | 22 |
|---|---|---|---|
| Rc 28j (MPa) | 26,5 | 22,5 | 30,5 |

Sulfate de calcium : semi-hydrate à 95% de pureté

Les résistances mécaniques sont mesurées sur des éprouvettes 2 x 2 x 10 cm, conservées à 20°C et 70% d'hygrométrie.

Les liants selon l'invention permettent d'obtenir des mortiers ayant de bons compromis de comportements tant rhéologiques que mécaniques.

## Revendications

**1.** Liant ettringitique pour mortier dense, ledit liant comprenant des sulfates de calcium et un composé minéral d'aluminates de calcium, **caractérisé en ce que** le composé minéral d'aluminates de calcium comprend des oxydes de calcium C et d'aluminium A, solubles et combinés en une ou plusieurs phases minéralogiques cristallisées et/ou amorphes, dans des proportions telles que :

- le rapport molaire C/A utile du composé minéral d'aluminates de calcium est compris entre 1,2 et 2,7 ;
- la somme en poids des phases (C+A) utiles représente au moins 30% du poids total du composé minéral ;
- le rapport molaire sulfate de calcium/oxyde d'aluminium a dans le liant ettringitique est compris entre 0,5 et 2.

**2.** Liant ettringitique selon la revendication 1 **caractérisé en ce que** le rapport pondéral composé minéral d'aluminates de calcium/sulfate de calcium est compris entre 0,5 et 4, de préférence entre 1,5 et 3.

**3.** Liant ettringitique selon la revendication 1 ou 2, **caractérisé en ce que** le rapport molaire C/A utile du composé minéral d'aluminates de calcium est compris entre 1,3 et 2,5, de préférence entre 1,6 et 2.

**4.** Liant ettringitique selon l'une des revendications 1 à 3, **caractérisé en ce que** le rapport molaire sulfate de calcium/oxyde d'aluminium A dans le liant ettringitique est compris entre 0,6 et 1,8, de préférence entre 0,8 et 1,7.

**5.** Liant ettringitique selon l'une quelconque des revendications 1 à 4, **caractérisé en ce que** la somme en poids des phases (C+A) utiles représente au moins 50% en poids du poids total du composé minéral d'aluminates de calcium.

**6.** Liant ettringitique selon l'une quelconque des revendications 1 à 5 **caractérisé en ce que** le composé minéral d'aluminates de calcium est obtenu par cuisson dans un four à une température supérieure à 1100°C, sous forme de un ou plusieurs clinkers fondus ou frittés qui peuvent contenir des phases cristallisées ou des phases amorphes.

**7.** Liant ettringitique pour mortier dense selon l'une quelconque des revendications 1 à 6 **caractérisé en ce que** le composé minéral d'aluminates de calcium est sous une phase minéralogique cristallisée choisie parmi CA, C12A7, C3A, C4A3$, ou sous une phase amorphe, ou sous la forme d'un mélange d'au moins une desdites phases minéralogiques cristallisées et d'une phase amorphe.

**8.** Liant ettringitique selon la revendication 7 **caractérisé en ce que** le composé minéral d'aluminates de calcium comprend au moins 30% en poids de C12A7, de préférence au moins 50% en poids de C12A7, mieux de 50% à 85% en poids de C12A7 par rapport au poids total du composé minéral.

**9.** Liant ettringitique selon l'une quelconque des revendications 1 à 8 **caractérisé en ce que** le composé minéral d'aluminates de calcium comprend au moins une phase minéralogique cristallisée choisie parmi C2A(1-x)Fx, C2S, C2AS, C3S et leurs mélanges, où x est un entier appartenant à] 0 ; 1].

**10.** Liant ettringitique selon l'une quelconque des revendications 1 à 9 **caractérisé en ce que** le composé minéral d'aluminates de calcium est broyé et présente une surface spécifique Blaine supérieure ou égale à 1500 $cm^2/g$.

**11.** Liant ettringitique selon la revendication 10 **caractérisé en ce que** le composé minéral d'aluminates de calcium est broyé à une surface spécifique Blaine comprise entre 2000 $cm^2/g$ et 5000 $cm^2/g$.

**12.** Liant ettringitique selon l'une quelconque des revendications 1 à 11, **caractérisé en ce que** le sulfate de calcium provient d'un composé choisi parmi les anhydrites, les semi-hydrates, le gypse et leurs mélanges.

Figure 1

Flux thermique, mW/g
Temps en minutes
1
2
0
5
10
15
20
25
30
35
40
0
60
120
180
240
300
360
420

Office européen des brevets

# RAPPORT DE RECHERCHE EUROPEENNE

Numéro de la demande
EP 05 07 7753

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 838 443 A (ARDEX GMBH) 29 avril 1998 (1998-04-29) * le document en entier * ----- | 1-12 | C04B7/32 |
| A | FR 2 529 192 A (FOSECO INT) 30 décembre 1983 (1983-12-30) * le document en entier * ----- | 1-12 | |
| A | US 3 147 129 A (ARMSTRONG JR THOMAS C ET AL) 1 septembre 1964 (1964-09-01) * le document en entier * ----- | 1-12 | |
| A | DE 32 18 446 A (RIGIPS GMBH) 17 novembre 1983 (1983-11-17) * le document en entier * ----- | 1-12 | |
| D,A | US 4 350 533 A (GALER RICHARD E ET AL) 21 septembre 1982 (1982-09-21) * le document en entier * ----- | | |

DOMAINES TECHNIQUES RECHERCHES (IPC)

C04B

Le présent rapport a été établi pour toutes les revendications

| Lieu de la recherche | Date d'achèvement de la recherche | Examinateur |
|---|---|---|
| Munich | 14 mars 2006 | Gattinger, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................
& : membre de la même famille, document correspondant

EPO FORM 1503 03.82 (P04C02)

3

## ANNEXE AU RAPPORT DE RECHERCHE EUROPEENNE RELATIF A LA DEMANDE DE BREVET EUROPEEN NO.

EP 05 07 7753

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-03-2006

| Document brevet cité au rapport de recherche | Date de publication | Membre(s) de la famille de brevet(s) | Date de publication |
|---|---|---|---|
| EP 0838443 A | 29-04-1998 | AT 202062 T | 15-06-2001 |
| FR 2529192 A | 30-12-1983 | AU 556631 B2 | 13-11-1986 |
| | | AU 1570983 A | 05-01-1984 |
| | | BE 897115 A1 | 17-10-1983 |
| | | BR 8303344 A | 07-02-1984 |
| | | CA 1197272 A1 | 26-11-1985 |
| | | DE 3322492 A1 | 29-12-1983 |
| | | GB 2123808 A | 08-02-1984 |
| | | US 4481037 A | 06-11-1984 |
| | | ZA 8304125 A | 28-03-1984 |
| US 3147129 A | 01-09-1964 | GB 938765 A | 09-10-1963 |
| DE 3218446 A | 17-11-1983 | CH 654821 A5 | 14-03-1986 |
| US 4350533 A | 21-09-1982 | CA 1182481 A1 | 12-02-1985 |
| | | JP 58026055 A | 16-02-1983 |

EPO FORM P0460

Pour tout renseignement concernant cette annexe : voir Journal Officiel de l'Office européen des brevets, No.12/82